# EUROPEAN PATENT SPECIFICATION

(11) **EP 1 377 022 B1**
(45) Date of publication and mention of the grant of the patent: **13.01.2010**
(21) Application number: 03253941.3
(22) Date of filing: 23.06.2003
(51) Int. Cl.: H04N 1/21, H04N 1/00

(54) **Image printing apparatus**
Bilddruckvorrichtung
Dispositif d'impression d'image

(30) Priority: 25.06.2002 KR 2002035669
(43) Date of publication of application: 02.01.2004
(73) Proprietor: SAMSUNG ELECTRONICS CO., LTD., Suwon-si, Gyeonggi-do 442-742 (KR)
(72) Inventor: Choi, Seung-young, Seocho-gu, Seoul (KR)
(74) Representative: Geary, Stuart Lloyd

(56) References cited:
- EP-A- 0 930 757
- EP-A- 1 176 500
- EP-A- 1 182 860
- WO-A-02/03318
- PATENT ABSTRACTS OF JAPAN vol. 2000, no. 02, 29 February 2000 (2000-02-29) & JP 11 321011 A (SEIKO EPSON CORP), 24 November 1999 (1999-11-24)
- PATENT ABSTRACTS OF JAPAN vol. 2000, no. 02, 29 February 2000 (2000-02-29) & JP 11 327865 A (SEIKO EPSON CORP), 30 November 1999 (1999-11-30)

## Description

The present invention relates to an image printing system comprising an image display free printing apparatus, having an interface for a memory card and data processing means for reading image data from a memory card via said interface, and a computer communicatively coupled to the printing apparatus for receiving image data therefrom and configured to display on a monitor images defined by image data received from the printing apparatus and a method of printing an image using a printing apparatus, which prints an image corresponding to image data read from an external memory card, and a personal computer, which is connectable to the printing apparatus.

In the following, image printing apparatus means a multi-function peripheral (MFP), a digital photo printer (DPP) or the like having a memory card interface section.

A conventional image printing apparatus can read and print data stored in a memory card. Some conventional image printing apparatuses include thin film transistor (TFT)-liquid crystal displays (LCD). The user of such apparatuses can scroll through the images stored in the memory card until a desired image is displayed on the TFT-LCD and then print it by operating keys. The keys are provided in a user interface section of the image printing apparatus. The LCD is expensive. In JP-A-11-321011, the LCD is replaced with a preview print function in which the images are printed together on one sheet of paper.

Other conventional image printing apparatuses do not include TFT-LCDs and must be connected to a personal computer so that the user can select an image for printing. The user must start a special application program, installed on the personal computer, and operate a mouse and/or a keyboard, connected to the personal computer, instead of operating the keys of the user interface section of the image printing apparatus, to scroll through images which are displayed on a monitor connected to the personal computer to find a desired image from among images stored in a memory card and to print the desired image. After reading the image information, corresponding to the image displayed on the monitor from the memory card, the image printing apparatus converts the image information into Cyan-Magenta-Yellow-Black (CMYK) format using a data converter, and outputs the CMYK data to an image printing engine of the image printing apparatus, thereby printing the image displayed on the monitor. Accordingly, this conventional image printing method is somewhat inconvenient because the user has to interface with the special application program running on the personal computer. In addition, when original image data is read from the memory card, an image, which is not a thumbnail image, is displayed full-size on the monitor. In this case, other activities of the user or another user using the personal computer are disturbed.

According to the present invention there is provided an image display-free printing system according to claim 1, a method of printing an image according to claim 9, and a printing apparatus comprised in the system according to claim 21. The subclaims define preferred embodiments of the system method and printer.

An embodiment of the present invention will now be described, by way of example, with reference to the accompanying drawings, in which:
Figure 1 is a flowchart of a process of printing an image from a memory card according to the present invention;
Figure 2 is a block diagram of an apparatus for printing an image by the process illustrated in Figure 1;
Figure 3 is a flowchart of an embodiment of operation 20 shown in Figure 1;
Figure 4 is a flowchart of an embodiment of operation 22 shown in Figure 1;
Figure 5 is a flowchart of an embodiment of operation 26 shown in Figure 1;
Figure 6 is a display diagram of image data displayed on a monitor;
Figure 7 is a flowchart of an embodiment of operation 30 shown in Figure 1;
Figure 8 is a more detailed block diagram of the apparatus shown in Figure 2;
Figure 9 is a block diagram of an embodiment of the print preparing section shown in Figure 8;
Figure 10 is a control block diagram of an embodiment of the data processor shown in Figure 8; and
Figure 11 is a control block diagram of an embodiment of the display controller shown in Figure 8.

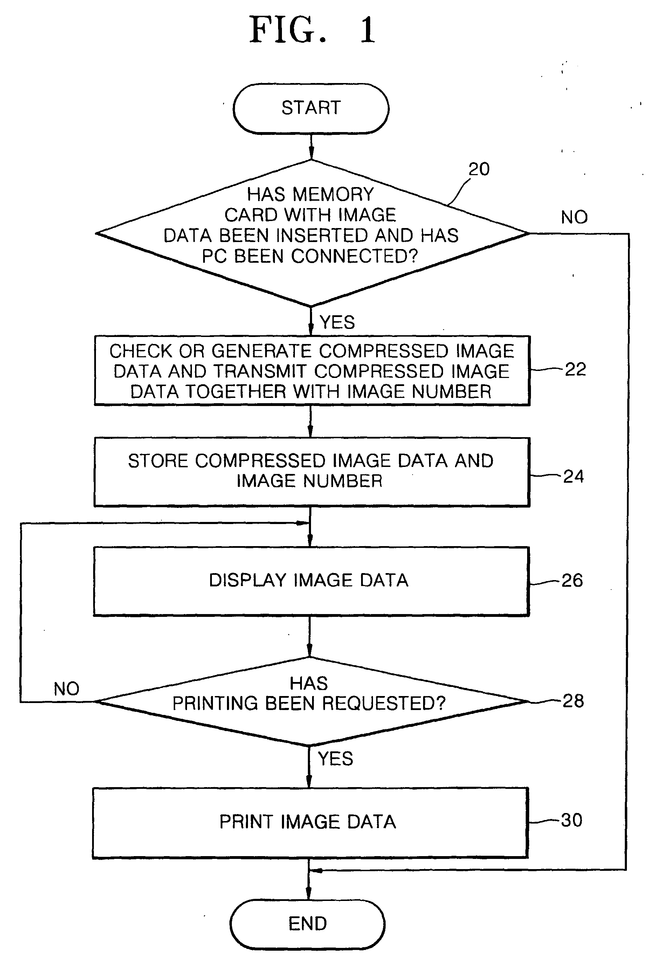

Referring to Figure 1, an image printing method comprises preparing to print an image (operation 20), transmitting, storing, and displaying preview image data, which is small in terms of both data and display size, (operations 22 to 26) and printing the image data (operations 28 to 30).

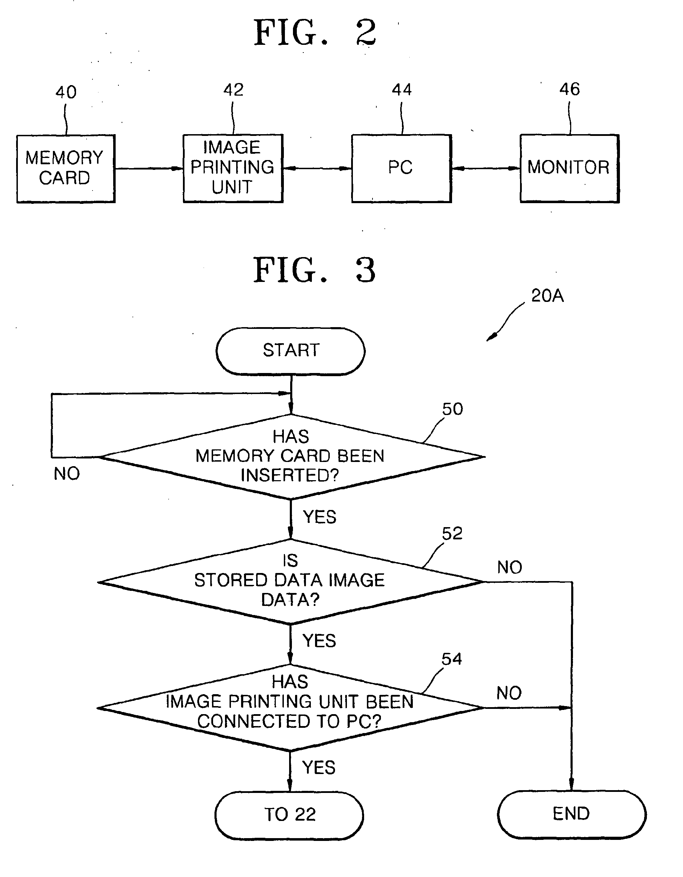

Referring to Figure 2, the image printing method is performed by an image printing unit 42 and a personal computer (PC) 44 as shown in Figure 2. The image printing unit 42 prints an image corresponding to image data, read from an external memory card 40, and is connected to a monitor 46 through the PC 44. For example, the image printing unit 42 is a multi-function peripheral (MFP) or a digital photo printer (DPP), which provides an interface section (not shown) for interfacing with the memory card 40. Typically, the MFP can perform at least two functions from among scanning, printing, faxing and copying.

In Figure 1, at operation 20, it is determined whether a memory card 40, holding image data, has been inserted into the image printing unit 42 and whether the image printing unit 42 has been connected to the PC 44.

Referring to Figure 3, the operations 50 through 54 determine whether the memory card 40 has been inserted into the image printing unit 42, the type of stored data, and the connection state of the image printing unit 42 respectively. More specifically, at operation 50, it is determined whether the memory card 40 has been inserted into the image printing unit 42. If, at operation 50, it is determined that the memory card 40 has been inserted into the image printing unit 42, it is determined whether data stored in the memory card 40 is image data (operation 52). If, at operation 52, it is determined that the data stored in the memory card 40 is not image data, the method shown in Figures 1 and 3 terminates. For example, if, at operation 52, it is determined that the, data stored in the memory card 40 is not image data, but text data, the method shown in Figures 1 and 3 terminates.

However, if it is determined that the data stored in the memory card 40 is image data at operation 52, it is determined whether the image printing unit 42 has been connected to the PC 44 (operation 54). If it is determined that the image printing unit 42 has been connected to the PC 44 at operation 54, the method progresses to operation 22 (operation 54). However, if it is determined that the image printing unit 42 has not been connected to the PC 44 at operation 54, the method shown in Figures 1 and 3 terminates.

In Figure 1, if it is determined that the memory card 40 with image data has been inserted into the image printing unit 42 at operation 20, and that the image printing unit 42 has been connected to the PC 44, it is checked that preview image data exists at operation 22, and if preview image data does not exist, preview image data is generated and the diminished image data is transmitted from the image printing unit 42 to the PC 44 together with an image number. Typically, the image printing unit 42 generates and manages image numbers in the order in which image data is stored in the memory card 40. In particular, the image printing unit 42 typically generates the image number according to the order in which the corresponding image data has been stored in the memory card 40 and transmits the image number to the PC 44.

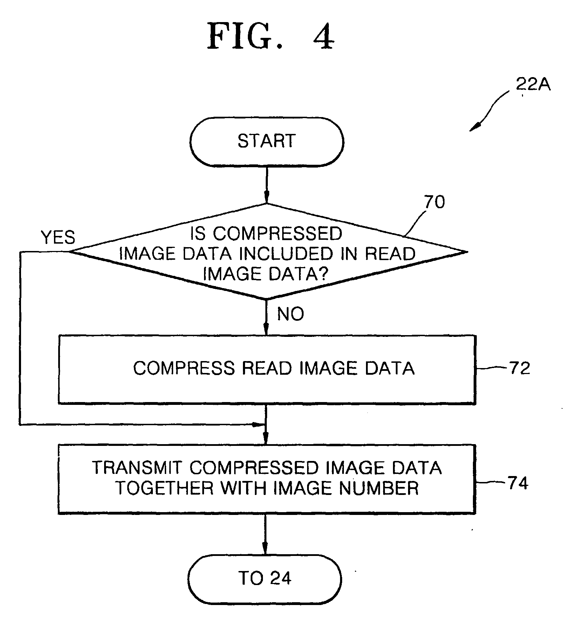

Referring to Figure 4, in operations 70 to 74, the diminished image data is obtained and transmitted by the image printing unit 42. More specifically, if it is determined that the memory card 40 with image data has been inserted into the image printing unit 42 and that the image printing unit 42 has been connected to the PC 44 (i.e. operations 20 and 50 to 54), the image printing unit 42 automatically determines whether the diminished image data is included in the image data read from the memory card 40 without a special command from the user at operation 22.

If it is determined that the diminished image data is not included in the image data read from the memory card 40 at operation 70, the image data read from the memory card 40 is preview image data at operation 72. However, if it is determined at operation 70 that the preview image data is included in the image data read from the memory card 40 or, after operation 72, the preview image data is transmitted from the image printing unit 42 to the PC 44 together with the corresponding image number at operation 74. After operation 74, the method progresses to operation 24 (Figure 1). Typically, the image printing unit 42 can temporarily store the preview image data before transmitting it to the PC 44. For example, in the case of Joint Picture Expert Group (JPEG) images, the preview image data can be included in a header portion based upon a data format in which the image data is stored in the memory card 40.

After operation 22, the PC 44 stores the preview image data and the image number transmitted from the image printing unit 42 at operation 24. Typically, the PC 44 matches the preview image data with image numbers when storing them for management. After operation 24, the PC 44 displays preview image data corresponding to an image number, which is selected by the user at the image printing unit 42 and provided from the image printing unit 42, from among the stored preview image data, on the monitor 46 at operation 26. Typically, the preview image displayed on the monitor 46 is a thumbnail image. When an image number is not provided from the image printing unit 42 to the PC 44, the PC 44 displays the preview image that is initially provided from the image printing unit 42 from among the stored preview image data, at operation 26.

After operation 26, it is determined whether the user has requested a print of the image data displayed on the monitor 46 at operation 28. If it is determined that the user has not requested a print at operation 28, the method returns to operation 26 (i.e. the PC 44 continues displaying the image data on the monitor 46).

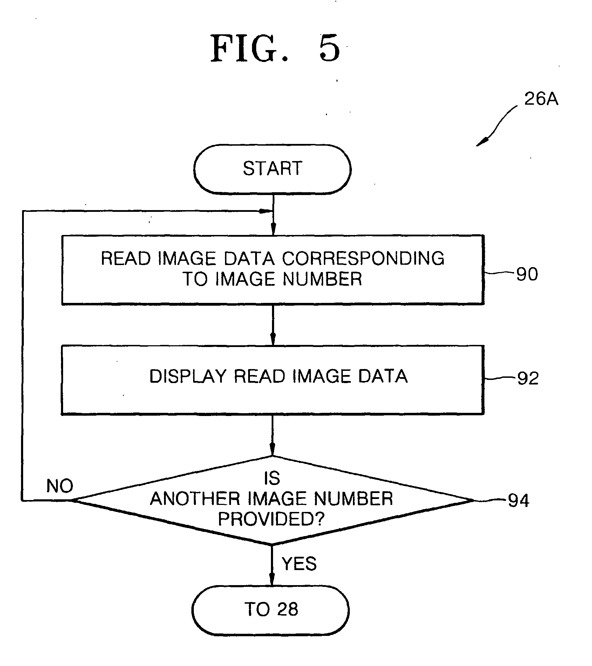

Referring to Figure 5, at operations 90 to 92, the preview image data, corresponding to the image number provided from the image printing unit 42, is read and displayed and it is determined whether another image number has been provided at operation 94. More specifically, after operation 24, the PC 44 reads the preview image data corresponding to the image number, selected by the user at the image printing unit 42 and provided from the image printing unit 42, from among the preview image data previously provided from the image printing unit 42 and stored in the PC 44 at operation 90. Typically, when an image number selected by the user does not exist, for example when a selected image number is not provided from the image printing unit 42 or when an incorrect image number is entered at the image printing unit 42, the PC 44 reads initial, or preceding, received preview image data from among the preview image data previously received from the image printing unit 42 and stored in the PC 44, and displays the read data on the monitor 46 at operation 90.

Typically, because it takes less time for a user to select an image number than for the PC 44 to display image data, another image number can be selected by the user at the image printing unit 42 before image data corresponding to another image number, selected by the user, is displayed on the monitor 46. In order to overcome such a time difference between when an image number is selected by a user at the image printing unit 42 and when image data is displayed on the monitor 46, two embodiments of operation 90 of the present invention are provided, as follows.

In a first embodiment of operation 90, after operation 24 (Figure 1), the PC 44 ignores the image number provided from the image printing unit 42 while image data is appearing on the monitor 46 and reads preview image data corresponding to the last image number provided from the image printing unit 42 after the previous image data is completely displayed, and the method progresses to operation 92. When the PC 44 ignores an image number provided from the image printing unit 42, image data corresponding to the image number is not read. The last image number provided from the image printing unit 42 indicates an image number that is most recently input to the PC 44 from the image printing unit 42 in the course of or after completion of displaying a previous image data on the monitor 46. Accordingly, typically, the PC 44 can display image data corresponding to an ignored image number on the monitor 46 only after previous image data has been completely displayed on the monitor 46.

In a second embodiment of operation 90, after operation 24 (Figure 1), the image printing unit 42 provides an image number selected by a user to the PC 44 when the PC 44 is ready to receive a new image number from the image printing unit 42, and the PC 44 reads image data corresponding to the selected image number provided from the image printing unit 42, and the method progresses to operation 92. Typically, the PC 44 is ready to receive a new image number after displaying the diminished image on the monitor 46.

Consequently, in the first embodiment, when a new image number is selected by a user in the course of displaying image data on the monitor 46, the PC 44 ignores the new image number even if the new image number is provided from the image printing unit 42 to the PC 44 and, in the second embodiment, the new image number is not provided from the image printing unit 42 to the PC 44 until the PC 44 is ready to receive the new image number.

After operation 90, at operation 92, the PC 44 displays the read image data on the monitor 46. Typically, the size of preview image data stored in the PC 44 is very small, so the diminished image corresponding to an image number is displayed on the monitor 46 within a very short period of time after the image number is input into the PC 44 from the image printing unit 42. The PC 44 can display the read image data in an appropriate size at a certain position on the monitor 46. The position and size of image data displayed on the monitor 46 can be predetermined and can vary. For example, the size of image data displayed on the monitor 46 can occupy only a part of a full screen of the monitor 46, so a user who wants to print an image can input image numbers at the image printing unit 42 scroll through images and select a desired image without disturbing the display of another application of the user or another user at the PC 44.

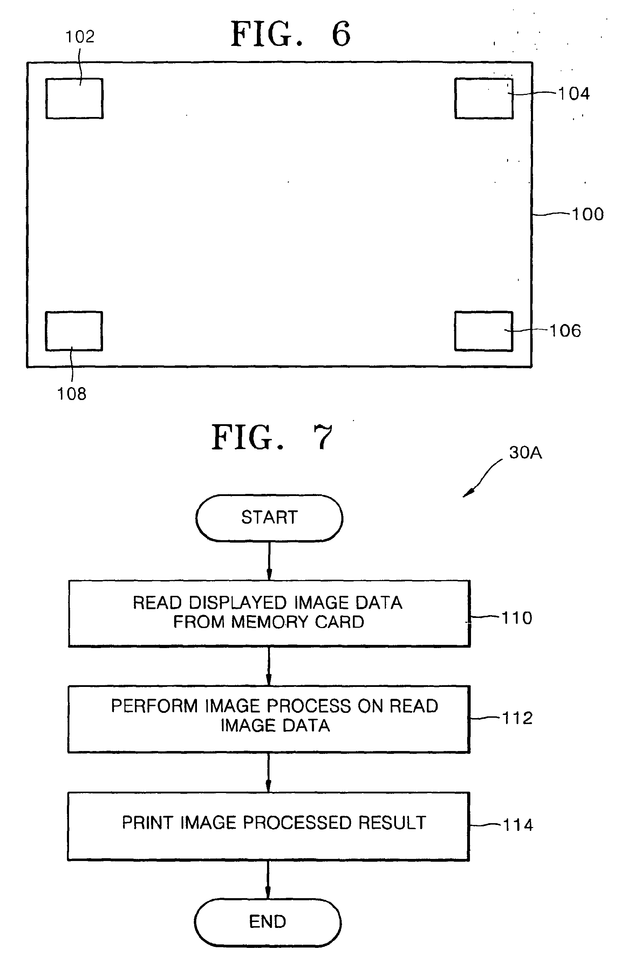

As shown in Figure 6, the size of preview image data 102, 104, 106, 108 displayed on the monitor 46 occupies only a part of a full screen 100. A user can previously select a position, at which the preview image data is to be displayed on the monitor 46, from a plurality of positions, such as the positions of displayed image data 102, 104, 106, 108 as shown in Figure 6, and can adjust the selected position later. The image data display size and position can be controlled via input command from the image printing unit 42, or using, for example a mouse (not shown) at the PC 44.

After operation 92, it is determined whether another image number selected by the user is provided from the image printing unit 42, at operation 94. In other words, at operation 94, it is determined whether the user wants to change the image currently displayed on the monitor 46 to another image (i.e., scroll through images). As described above, the user can cause different images to be displayed on the monitor 46 by selecting different image numbers in the image printing unit 42.

If it is determined that another image number is provided, for example if it is determined that the user wants to display another image because the image currently displayed on the monitor 46 is not the one that the user wants to print, at operation 94, the method returns to operation 90. Accordingly, the image data corresponding to the newly provided image number is read and the image displayed on the monitor 46 in operations 90 and 92. However, if it is determined that no other image number has been provided at operation 94, the method progresses to operation 28 to determine at the image printing unit 42 whether printing of the displayed image has been requested.

Consequently, as shown in Figure 5, operations 90 through 94 are repeated until the desired image is displayed on the monitor 46. In particular, in Figure 1, if it is determined that the user does not want to print the image displayed on the monitor 46, at operation 28, the method returns to operation 26 to repeat operations 90 through 94. In other words, since the user does not want to print the image displayed on the monitor 46, it can be determined whether the user selects another image number. If it is determined that the user wants to print the image currently displayed on the monitor 46 at operation 28, the image printing unit 42 prints the image displayed on the monitor 46 at operation 30.

Referring to Figure 7, in operations 110 to 114, the image data is read from the memory card 40 by the image printing unit 42, and then the image is processed and printed at and/or by the image printing unit 42.

If it is determined that the user wants to print the image displayed on the monitor 46 at operation 110, the image printing unit 42 reads the full image data for the image currently displayed on the monitor 46 from the memory card 40. After operation 110, the image printing unit 42 performs an image process, such as converting the image data read from the memory card 40 into a printable CMYK format, at operation 112. After operation 112, the image printing unit 42 prints the image using the processed image data.

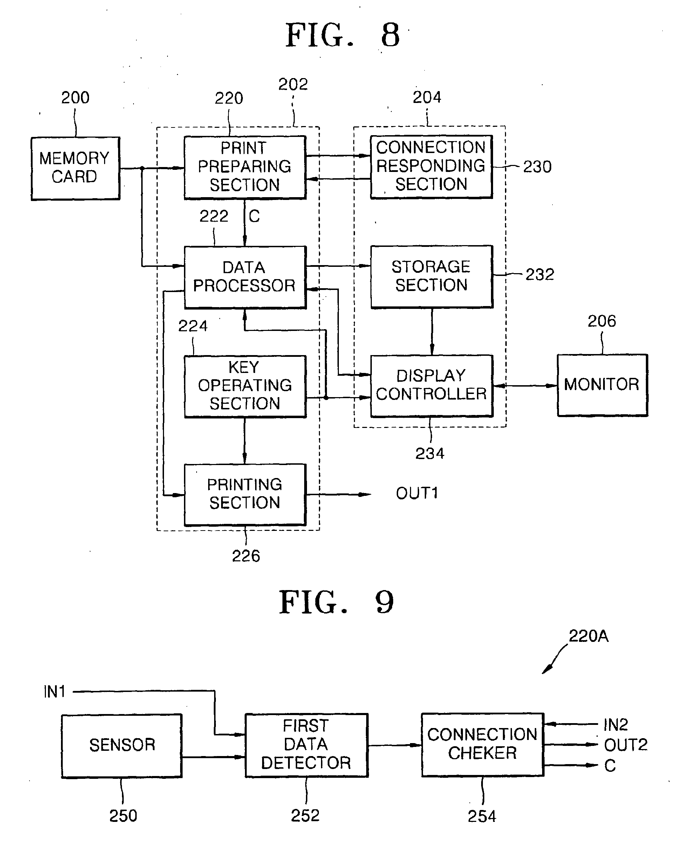

The structure and operation of an apparatus for printing an image using the above-described method will now be described with reference to Figures 8 to 11.

Referring to Figure 8, an image printing unit 202, which corresponds to the image printing unit 42 shown in Figure 2, comprises a print preparation section 220, a data processor 222, a key section 224 and a printing section 226. A PC 204, which corresponds to the PC 44 shown in Figure 2, comprises a connection responding section 230, a storage section 232 and a display controller 234. There are also a memory card 200 and a monitor 206, which correspond to the memory card 40 and the monitor 46 shown in Figure 2.

To perform operation 20 shown in Figure 1, the print preparation section 220 of the image printing unit 202 determines whether a memory card 200 holding image data has been inserted in the image printing unit 202 and whether the image printing unit 202 has been connected to the PC 204, and outputs the result of these determinations as a control signal C to the data processor 222 of the image printing unit 202.

Referring to Figure 9, the print preparation section 220 comprises a sensor 250, a first data detector 252 and a connection checker 254. The print preparation section 220A performs operation 20 as shown in Figure 3. In order to perform operation 50 in Figure 3, the sensor 250 of the print preparation section 220A senses whether the memory card 200 has been inserted in the image printing unit 202 and outputs the result of its sensing operation to the first data detector 252. To perform operation 52 in Figure 3, the first data detector 252 detects the type of data, which is read from the memory card 200 and input through an input terminal IN₁, in response to the result of the sensing received from the sensor 250 indicating the presence of a memory card 200, and outputs the result of the detection to the connection checker 254.

To perform operation 54 in Figure 3, the connection checker 254 checks whether the PC 204 has been connected to the image printing unit 202, in response to the result of detection received from the first data detector 252 indicating that the data in the memory card 200 is image data, and outputs the result of this checking as the control signal C to the data processor 222. To check the state of the connection, the connection checker 254 outputs an interrupt signal to the PC 204 through an output terminal OUT2, checks for a response, which should be transmitted from the PC 204 and input through an input terminal IN2, and checks whether the image printing unit 202 is connected to the PC 204 based on the response received from the PC 204. For this operation, the PC 204 is provided with the connection responding section 230. The connection responding section 230 of the PC 204 transmits the response to the interrupt signal to the input terminal IN2 of the connection checker 254.

In the meantime, to perform operation 22, the data processor 222 shown in Figure 8 performs an image process, such as converting the format of image data read from the memory card 200, checks or generates preview image data in response to the control signal C received from the print preparing section 220, and transmits the generated or checked preview image data to the PC 204 together with an image number.

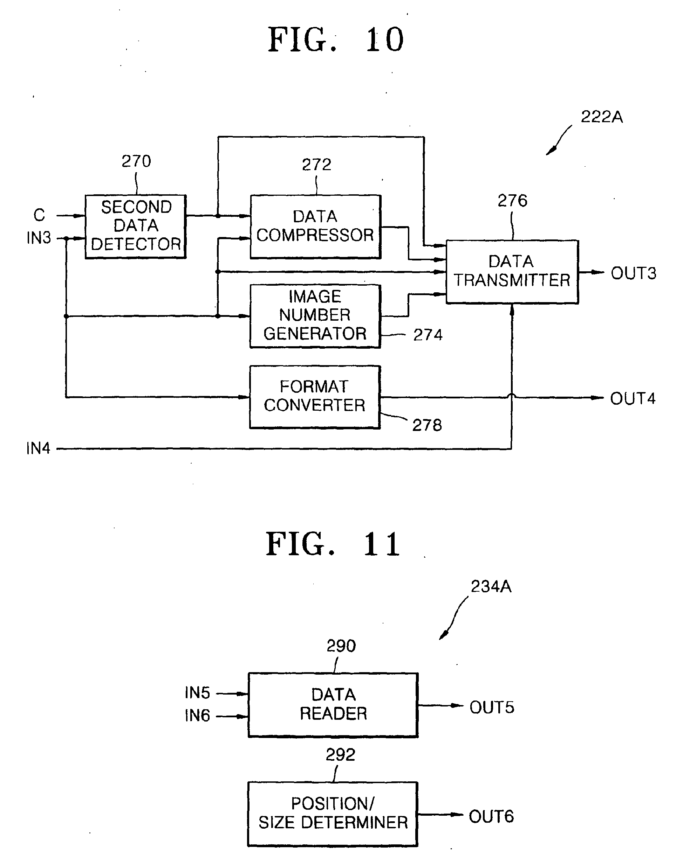

Referring to Figure 10, the data processor 222 comprises a second data detector 270, a data reducer 272, an image number generator 274, a data transmitter 276 and a format converter 278. The data processor 222A performs operation 22 (Figure 1) as shown in Figure 4. In Figure 4, to perform operation 70, the second data detector 270 of the data processor 222 detects whether preview image data is included in the image data, which is read from the memory card 200 and input through an input terminal IN3, in response to the control signal C received from the print preparing section 220, and outputs the result of the detection to the data reducer 272. Therefore, when it is recognized that the memory card 200 with image data has been inserted and the image printing unit 202 has been connected to the PC 204 according to the control signal C, the second data detector 270 detects the type of data read from the memory card 200 (i.e. the second data detector 270 determines whether the image data read from the memory card 200 includes preview image data).

To perform operation 72 (Figure 4), the data reducer 272 generates preview image data from the image data, which is read from the memory card 200 and input through the input terminal IN3, if the result of the detection, received from the second data detector 270, indicates the absence of preview image data and outputs the generated preview image data to the data transmitter 276. In particular, when it is recognized that preview image data is not included in the image data read from the memory card 200, according to the result of detection received from the second data detector 270, the data reducer 272 generates preview image data from the image data read from the memory card 200.

To perform operation 74 (Figure 4), the image number generator 274 and the data transmitter 276 are provided. The image number generator 274 generates an image number, which is uniquely allocated to the each image whose data that is read from the memory card 200 and input through the input terminal IN3, and outputs the image number to the data transmitter 276. In response to the result of detection received from the second data detector 270, or in response to the data reducer 272 reducing the image data read from the memory card 200, the data transmitter 276 transmits the preview image data to the PC 204 through an output terminal OUT3 together with the image number received from the image number generator 274. For example, when it is recognized, based on the result of detection received from the second data detector 270, that preview image data is not included in the read image data, the data transmitter 276 transmits the preview image data, generated by the data reducer 272, to the PC 204 through the output terminal OUT3 together with the image number received from the image number generator 274. However, when it is recognized, based on the result of detection received from the second data detector 270, that preview image data is included in the image data, the data transmitter 276 transmits the preview image data, which is read from the memory card 200 and input through the input terminal IN3, to the PC 204 through the output terminal OUT3, together with the image number received from the image number generator 274.

The format converter 278 performs operation 112 (Figure 7). To perform operation 112 as shown in Figure 7, the format converter 278 converts the RGB format image data, received from the memory card 200 through the input terminal IN3, into CMYK format image data, and outputs the image data having the CMYK format to the printing section 226 of the image printing unit 202 through an output terminal OUT4.

To perform operation 24 (Figure 1), the storage section 232 of the PC 204 stores the preview image data and the corresponding image number, which are received from the data processor 222 of the image printing unit 202. The storage section 232 may be the main memory of the PC 204 or an auxiliary memory such as a hard disk. To perform operation 26 (Figure 1), the display controller 234 of the PC 204 reads the preview image data, which corresponds to an image number selected through the key section 224 of the image printing unit 202, from the storage section 232, and outputs the read preview image data for display of the image by the monitor 206. The monitor 206 receives the preview image in the signal from the display controller 234 of the PC 204 and displays the preview image. In order to generate the selected image number, the image printing unit 202 is provided with the key section 224. The key section 224 is operated by a user to select, for example, one image number from among image many numbers generated by the image number generator 274 (i.e. generated by the data processor 222 as shown in Figure 10).

To provide for the selection of an image number, the key section 224 has a plurality of keys (not shown), such as an up key and a down key. In this case, a user can increment the image number using the up key and decrement the image number using the down key. The image number selected using the key section 224 can be output to the display controller 234 through the data processor 222. In this case, the data transmitter 276 receives the selected image number through an input terminal IN4 from the key section 224, and transmits the received image number to the display controller 234 of the PC 204 through the output terminal OUT3. Alternatively, as shown in Figure 8, the image number selected using the key operating section 224 can be directly transmitted to the display controller 234 without passing through the data processor 222.

Referring to Figure 11, the display controller 234 of the PC 204 comprises a data reader 290 and a position/size determiner 292. To perform operations 90 and 92 shown in Figure 5, the data reader 290 of the display controller 234 reads, from the storage section 232 of the PC 204, through an input terminal IN6 preview image data, which corresponds to the selected image number that is generated at the key section 224 of the image printing unit 202 and received from the image printing unit 202 through an input terminal INS, and outputs the preview image data to the monitor 206 through an output terminal OUTS. Accordingly, the image whose data is read by and output from the data reader 290 of the PC 204 can be displayed on the monitor 206.

The display controller 234 of the PC 204 also comprises the position/size determiner 292. The position/size determiner 292 determines the position at which the image, whose data was read from the storage section 232, is displayed on the screen of the monitor 206 and the size of the image on the screen, and outputs the determined position and size to the monitor 206 through an output terminal OUT6. The monitor 206 displays the diminished image in the determined size at the determined position on the screen. According to the present invention, the position and size output from the position/size determiner 292 to control the monitor 206 can be predetermined and then varied.

To perform operation 28 (Figure 1), the key operating section 224 of the image printing unit 202 generates a print request signal to request printing of an image, in response to a user's operation, and outputs the print request signal to the printing section 226 of the image printing unit 202. For this operation, the key section 224 can be provided with a separate print request key (not shown). To perform operation 30 (Figure 1), the printing section 226 prints using the CMYK image data, which is received from the data processor 222 (i.e. the format converter 278 as shown in Figure 10), in response to the print request signal, received from the key section 224, and outputs the result through an output terminal OUT1. For example, when it is recognized from the print request signal that printing of the displayed image data has been requested, the printing section 226 prints using the CMYK image data, received from the format converter 278 of the data processor 222A. The printed image data is concurrently displayed on the monitor 206. However, the size of the currently displayed image may not be the same as the printed image. For example, when preview image data is not included in the image data read from the memory card 200, the size of displayed image data may not be the same as that of printed image data, because the displayed image data may still be a preview image.

In Figure 1, at operation 28, when another image number is not provided, the key section 224 can check whether a user is requesting printing by operating the keys of the key section 224. In particular, to perform operation 94 (Figure 5 ) when printing is not requested, the key section 224 checks whether the user is selecting another image by operating the keys of the key section 224, when it is recognized that printing has not been requested.

According to an aspect of the present invention, unlike the apparatus shown in Figure 8, data communication paths between the image printing unit 202 and the PC 204 can be integrated. For the integrated communication path, an interface section (not shown) interfacing the image printing unit 202 with the PC 204 can be separately provided in the image printing unit 202 and in the PC 204. In this case, the print preparing section 220 and the connection responding section 230 transmit and receive data through the interface section, the data processor 222 transmits preview image data and an image number to the storage section 232 through the interface section, and an image number selected in the key operating section 224 is transmitted to the display controller 234 through the interface section. For example, the interface section can be a Universal Serial Bus (USB) interface section, which also comprises a USB cable.

As described above, in an apparatus and method for printing an image using a memory card according to the present invention, a user can scroll through images and print a desired image displayed on the monitor 46 (i.e., 206) by operating only the image printing unit 42 (i.e., 202) without the assistance of expensive separate display equipment at the imaging printing unit 42, such as a TFT-LCD, without operating a special application program to control image data display, manipulation, and printing at a PC, and without disturbing the user's other executing applications or another user of the PC, so that the user can selectively read a desired image from the memory card and easily print the image at a low cost. In particular, according to the present invention, the PC 44 and monitor 46 are not integrated components of the image printing unit 42, but are in communication with the image printing unit 42 and controlled by image printing unit 42 to display image data for image data print selection by the user at the image printing unit 42.

Therefore, the present invention provides an image printing system printing an image using an image printing unit without an image display, which prints the image read from an external memory card, and a personal computer connected to the image printing unit. If the memory card with the image data has been inserted into the image printing unit and the image printing unit has been connected to the personal computer, the read image data and a user selected image number are transmitted to the personal computer for displaying by the personal computer. The image printing unit prints the displayed image data corresponding to the user selected image number in response to a user print request at the image printing unit. Accordingly, the present invention allows an image display-free image printing unit to remotely control image data display and manipulation and local printing of the remotely displayed image data. The processes of the present invention as shown in Figure 1 are implemented in computing hardware and/or software in an image printing apparatus and a computer system in communication with the image printing apparatus.

## Claims

1. An image printing system comprising:
an image display-free printing apparatus (202), having user input means (224), an interface for a memory card (200) and data processing means (222) for reading image data from a memory card (200) via said interface, and
a computer (204) communicatively coupled to the printing apparatus (202) for receiving image data therefrom and configured to display on a monitor (206) images defined by image data received from the printing apparatus,
**characterised in that**
the printing apparatus (202) is configured to transmit preview images, relating to image data readable from a memory card (200) via said interface, together with associated index values to the computer (204), and
the computer (204) is configured for storing preview images and associated index values, received from the image display-free printing means (202), and displaying said preview images, and
the printing apparatus (202) is configured to send control signals to the computer (204) in response to operation of the user input means (224) and the computer (204) is responsive to said control signals to control the display of the preview images received from the printing apparatus (202), the printing apparatus (202) printing the displayed image data in response to a user print request at the image display-free printing apparatus by reading the full image data for the image currently on display on the monitor (206) from the memory card.

2. An image printing system according to claim 1, wherein the printing apparatus (202) is configured to determine whether an image stored in a memory card (200), accessible via said interface, is accompanied by a preview image and, if not, to create a preview image for transmission to the computer (204) for display.

3. An image printing system according to claim 1, wherein:
the computer (204) is a personal computer;
the printing apparatus (202) comprises:
a print preparing section (220) for determining whether a memory card (200), carrying image data, has been inserted into the printing apparatus (202) so as to connect to said interface and whether printing apparatus (202) has been connected to the personal computer (204), and outputting a determination result as a control signal (C);
a data processor (222) for processing image data, read from a memory card (200) via said interface, checking for or generating preview image data in response to the control signal (C) and transmitting the preview image data to the personal computer (204) together with the associated image index values;
a user-operable key operating section (224) for selecting an image index value and outputting a print request signal, requesting printing the image data corresponding to a user-selected image index value; and
a printing section (226) for printing the image-processed image data, received from the data processor (222), in response to a print request signal from the user-operable key operating section (224), and
the personal computer (204) comprising:
a memory (232) for storing preview image data and associated image index values transmitted from the data processor (222); and
a display controller (234) for reading preview image data, corresponding to a user-selected image index value from the image printing unit, from the memory (232) and displaying the read image data on the monitor (206).

4. An image printing system according to claim 3, wherein the print preparing section comprises:
a sensor (250) for sensing whether a memory card (200) has been inserted and outputting a sensing result;
a first data detector (252) for detecting the type of data read from the memory card (200) in response to the sensing result; and
a connection checker (254) for checking whether the personal computer (204) has been connected to the printing apparatus (220) in response to a detection result received from the first data detector (252) and outputting a connection check control signal.

5. An image printing system according to claim 3, wherein the data processor (222) comprises:
a second data detector (270) for detecting whether image data read from a memory card (200), via said interface, includes preview image data in response to the control signal;
a data compressor (272) for compressing the image data, read from a memory card (200) via said interface, to produce a preview image in response to a detection result received from the second data detector (270);
an image index value generator (274) for generating the image index values which are unique within the images read from the same memory card (200);
a data transmitter (276) for transmitting the preview image data, received from a memory card (200) or from the data compressor (272), to the personal computer (204) together with the generated image index values, received from the image number generator (274), in response to the detection result received from the second data detector (270), and transmitting a user-selected image index value received from the key operating section (224) to the personal computer (204); and
a format converter (278) for converting RGB format image data, read from a memory card (200), into CMYK format image data and outputting the CMYK format image data to the printing section (226).

6. An image printing system according to claim 3, wherein the display controller (234) comprises a data reader (290) for reading, from the memory (232), image data corresponding to a user-selected image index value, which is generated in the key operating section (224) and transmitted from the printing apparatus (202), and outputting the read image data to the monitor (206) for display.

7. An image printing system according to claim 3, wherein the display controller (234) comprises a position/size determiner (292) for determining a position at which the read image data is to be displayed on the monitor (206) and the size of the read preview image data to be displayed and the monitor (206) displays the read image data according to the determined size at the determined position.

8. The system of claim 7, wherein the position/size determiner (292) varies the display position and size of the preview image data and outputs the varied results to the monitor (206).

9. A method of printing an image using a printing apparatus (220), which prints an image corresponding to image data read from an external memory card (200), and a personal computer (204), which is connectable to the printing apparatus (220), the method being **characterised by**:
checking for or generating preview image data in the printing apparatus (202);
transmitting the preview image data to the personal computer (204) together with an associated image index value;
storing the preview image data and the image index value, transmitted from the printing apparatus (202), in the personal computer (204);
displaying, by the personal computer (204), the preview image data transmitted from the printing apparatus (202);
sending control signals from the printing apparatus (202) to the computer (204) in response to operation of the user input means (224) of the printing apparatus (202);
controlling, at the personal computer (204), the display of the preview image data in response to the control signals received from the printing apparatus (202); and
printing, at the printing apparatus (202), the displayed image in response to a user print request at the printing apparatus (202) by reading the full image data of the displayed image from the memory-card (200).

10. A method according to claim 9, further comprising:
determining whether a memory card (200), carrying image data, has been inserted into the printing apparatus (202) and whether the printing apparatus (202) has been connected to the personal computer (204),
wherein the preview image data is checked for or generated upon the determining of insertion of the memory card (200) into the printing apparatus (202) and connection of the printing apparatus (202) to the personal computer (204).

11. A method according to claim 9, wherein, if the user does not request printing of the displayed image, the displaying of the preview image data at the personal computer (204) continues.

12. A method according to claim 10, wherein the determining comprises:
determining whether data stored in the memory card is image data, if it has been determined that the memory card (200) has been inserted into the printing apparatus (202); and
determining whether the printing apparatus (202) has been connected to the personal computer (204), if it has been determined that the data stored in the memory card (200) is image data.

13. A method according to claim 9, wherein the checking for or the generating of the preview image data comprises:
determining whether the image data, read from the memory card (200), includes preview image data; and
compressing the image data, if it has been determined that the image data, read from the memory card (200), does not include preview image data.

14. A method according to claim 9, wherein the displaying of the image data comprises:
reading by the personal computer (204) of the preview image data corresponding to a user-selected image index value, selected at the printing apparatus (202) and transmitted from the printing apparatus (202) to the personal computer (204); and
displaying the read preview image data.

15. A method according to claim 14, wherein the reading of the preview image data comprises:
ignoring the image index value provided from the printing apparatus (202) as a last image index value, if a previous preview image is being displayed; and
reading the preview image data, corresponding to the last image index value, after the previous preview image has been displayed completely.

16. A method according to claim 14, wherein the displaying of the preview image data further comprises:
transmitting the user-selected image index value to the personal computer (204), if the personal computer (204) is ready to receive a new image index value; and
reading by the personal computer (204) of the preview image data corresponding to the user-selected image index value provided from the printing apparatus (202).

17. A method according to claim9, wherein the personal computer (204) includes a monitor (206), and the preview image data is displayed with a predetermined size at a predetermined position on the monitor (206).

18. A method according to claim 9, wherein the preview image data is displayed according to a variable size at a variable position.

19. A method according to claim 17, wherein the predetermined size occupies a part of the screen of the monitor (206).

20. A method according to claim 9, wherein the printing of the image data comprises:
reading, at the printing apparatus (202), the uncompressed image data, corresponding to the displayed preview image, from the memory card (200) in response to the user print request;
image processing the read image data; and
printing the image-processed image data.

21. An image display-free printing apparatus comprised in a system, according to any of claims 1-8 comprising:
user input means (224)
an interface for a memory card (200);
data processing means (222) for reading image data from a memory card (200) via said interface; and
communication means (276) for communicatively coupling it to a personal computer (204),
wherein the apparatus (202) is configured to transmit preview images, relating to image data readable from a memory card (200) via said interface, together with associated index values to the personal computer (204).

22. A printing apparatus according to claim 21, wherein the data processing means (222) is configured for:-
detecting insertion of a memory card (200), carrying image data, into the apparatus (202) so as to connect to said interface and detecting connection of the apparatus (202) to a personal computer (204) by said communication means (276), and
transmitting image data read from a memory card (200) and a generated image index value, to the personal computer (204).

## Patentansprüche

1. Bilddrucksystem, umfassend:
eine bildanzeigefreie Druckvorrichtung (202) mit Benutzereingabemitteln (224), einer Schnittstelle für eine Speicherkarte (200) und Datenverarbeitungsmitteln (222) zum Lesen von Bilddaten von einer Speicherkarte (200) über die Schnittstelle und
einen Computer (204), der kommunikativ an die Druckvorrichtung (202) zum Empfangen von Bilddaten davon gekoppelt ist und konfiguriert ist, um Bilder auf einem Monitor (206) anzuzeigen, die durch Bilddaten definiert sind, die von der Druckvorrichtung empfangen wurden,
**dadurch gekennzeichnet, dass**
die Druckvorrichtung (202) konfiguriert ist, um Vorschaubilder, die zu Bilddaten, die von einer Speicherkarte (200) über die Schnittstelle lesbar sind, in Beziehung stehen, zusammen mit assoziierten Indexwerten an den Computer (204) zu übermitteln, und
der Computer (204) konfiguriert ist, um Vorschaubilder und assoziierte Indexwerte, die von dem bildanzeigefreien Druckmittel (202) empfangen wurden, zu speichern und die Vorschaubilder anzuzeigen, und
die Druckvorrichtung (202) konfiguriert ist, um Steuersignale an den Computer (204) als Reaktion auf Operation der Benutzereingabemittel (224) zu senden, wobei der Computer (204) auf die Steuersignale reagiert, um die Anzeige der Vorschaubilder, die von der Druckvorrichtung (202) empfangen wurden, zu steuern, die Druckvorrichtung (202) die angezeigten Bilddaten als Reaktion auf eine Benutzer-Druckanforderung an der bildanzeigefreien Druckvorrichtung durch Lesen der vollen Bilddaten von der Speicherkarte für das Bild, das gegenwärtig an dem Monitor (206) zur Anzeige kommt, druckt.

2. Bilddrucksystem nach Anspruch 1, wobei die Druckvorrichtung (202) konfiguriert ist, um zu bestimmen, ob ein Bild, das in einer Speicherkarte (200) gespeichert ist, die über die Schnittstelle zugänglich ist, von einem Vorschaubild begleitet wird, und, falls nicht, ein Vorschaubild zur Übertragung an den Computer (204) zur Anzeige zu erzeugen.

3. Bilddrucksystem nach Anspruch 1, wobei:
der Computer (204) ein Personal-Computer ist;
die Druckvorrichtung (202) umfasst:
einen Druckvorbereitungsabschnitt (220) zum Bestimmen, ob eine Speicherkarte (200), die Bilddaten trägt, in die Druckvorrichtung (202) eingesetzt wurde, um mit der Schnittstelle verbunden zu werden, und ob die Druckvorrichtung (202) mit dem Personal-Computer (204) verbunden wurde, und zum Ausgeben eines Bestimmungsergebnisses als ein Steuersignal (C);
einen Datenprozessor (222) zum Verarbeiten von Bilddaten, die von einer Speicherkarte (200) über die Schnittstelle gelesen wurden, Prüfen auf oder Erzeugen von Vorschaubilddaten als Reaktion auf das Steuersignal (C) und Übermitteln der Vorschaubilddaten zusammen mit den assoziierten Bildindexwerten an den Personal-Computer (204);
einen Benutzer-betriebsfähigen Tastenoperationsabschnitt (224) zum Auswählen eines Bildindexwerts und Ausgeben eines Druckanforderungssignals, das anfordert, die Bilddaten zu drucken, die mit einem Benutzer-ausgewählten Bildindexwert korrespondieren; und
einen Druckabschnitt (226) zum Drucken der bildbearbeiteten Bilddaten, die von dem Datenprozessor (222) empfangen wurden, als Reaktion auf ein Druckanforderungssignal von dem Benutzer-betriebsfähigen Tastenoperationsabschnitt (224), und
der Personal-Computer (204) umfassend:
einen Speicher (232) zum Speichern von Vorschaubilddaten und assoziierter Bildindexwerte, die von dem Datenprozessor (222) übermittelt wurden; und
eine Anzeigesteuerung (234) zum Lesen von Vorschaubilddaten, die mit einem Benutzer-ausgewählten Bildindexwert von der Bilddruckeinheit korrespondieren, aus dem Speicher (232) und Anzeigen der gelesenen Bilddaten auf dem Monitor (206).

4. Bilddrucksystem nach Anspruch 3, wobei der Druckvorbereitungsabschnitt umfasst:
einen Sensor (250) zum Erfassen, ob eine Speicherkarte (200) eingesetzt wurde, und Ausgeben eines Erfassungsergebnisses;
einen ersten Datendetektor (252) zum Detektieren des Typs der Daten, die als Reaktion auf das Erfassungsergebnis von der Speicherkarte (200) gelesen wurden; und
einen Verbindungsprüfer (254) zum Prüfen, ob der Personal-Computer (204) mit der Druckvorrichtung (220) verbunden wurde, als Reaktion auf ein Detektionsergebnis, das von dem ersten Datendetektor (252) empfangen wurde, und Ausgeben eines Verbindungsprüfungs-Steuersignals.

5. Bilddrucksystem nach Anspruch 3, wobei der Datenprozessor (222) umfasst:
einen zweiten Datendetektor (270) zum Detektieren, ob Bilddaten, die von einer Speicherkarte (200) über die Schnittstelle gelesen wurden, Vorschaubilddaten enthalten, als Reaktion auf das Steuersignal;
einen Datenkompressor (272) zum Komprimieren der Bilddaten, die von einer Speicherkarte (200) über die Schnittstelle gelesen wurden, um ein Vorschaubild zu erzeugen, als Reaktion auf ein Detektionsergebnis, das von dem zweiten Datendetektor (270) empfangen wurde;
einen Bildindexwerterzeuger (274) zum Erzeugen der Bildindexwerte, die innerhalb der von derselben Speicherkarte (200) gelesenen Bilder eindeutig sind;
einen Datenübermittler (276) zum Übermitteln der Vorschaubilddaten, die von einer Speicherkarte (200) oder von dem Datenkompressor (272) empfangen wurden, an den Personal-Computer (204) zusammen mit den erzeugten Bildindexwerten, die von dem Bildnummernerzeuger (274) empfangen wurden, als Reaktion auf das Detektionsergebnis, das von dem zweiten Datendetektor (270) empfangen wurde, und Übermitteln eines Benutzer-ausgewählten Bildindexwerts, der von dem Tastenoperationsabschnitt (224) empfangen wurde, an den Personal-Computer (204); und
einen Formatumwandler (278) zum Umwandeln von Bilddaten des Formats RGB, die von einer Speicherkarte (200) gelesen wurden, in Bilddaten des Formats CMYK und Ausgeben der Bilddaten des Formats CMYK zu dem Druckabschnitt (226).

6. Bilddrucksystem nach Anspruch 3, wobei die Anzeigesteuerung (234) einen Datenleser (290) zum Lesen von Bilddaten aus dem Speicher (232) umfasst, die mit einem Benutzer-ausgewählten Bildindexwert korrespondieren, der in dem Tastenoperationsabschnitt (224) erzeugt und von der Druckvorrichtung (202) übermittelt wird, und zum Ausgeben der gelesenen Bilddaten an den Monitor (206) zur Anzeige.

7. Bilddrucksystem nach Anspruch 3, wobei die Anzeigesteuerung (234) einen Positions-/Größenbestimmer (292) umfasst zum Bestimmen einer Position, an der die gelesenen Bilddaten auf dem Monitor (206) anzuzeigen sind, und der Größe der gelesenen Vorschaubilddaten, die anzuzeigen sind, und der Monitor (206) die gelesenen Bilddaten gemäß der bestimmten Größe an der bestimmten Position anzeigt.

8. System nach Anspruch 7, wobei der Positions-/Größenbestimmer (292) die Anzeigeposition und Größe der Vorschaubilddaten abwandelt und die abgewandelten Ergebnisse an den Monitor (206) ausgibt.

9. Verfahren zum Drucken eines Bilds unter Verwendung einer Druckvorrichtung (220), die ein Bild druckt, das mit Bilddaten korrespondiert, die von einer externen Speicherkarte (200) gelesen wurden, und eines Personal-Computers (204), der mit der Druckvorrichtung (220) verbindbar ist, das Verfahren **gekennzeichnet durch**:
Prüfen auf oder Erzeugen von Vorschaubilddaten in der Druckvorrichtung (202);
Übermitteln der Vorschaubilddaten an den Personal-Computer (204) zusammen mit einem assoziierten Bildindexwert;
Speichern der Vorschaubilddaten und des Bildindexwerts, die von der Druckvorrichtung (202) übermittelt wurden, in dem Personal-Computer (204);
Anzeigen, **durch** den Personal-Computer (204), der Vorschaubilddaten, die von der Druckvorrichtung (202) übermittelt wurden;
Senden von Steuersignalen von der Druckvorrichtung (202) an den Computer (204) als Reaktion auf Operation des Benutzereingabemittels (224) der Druckvorrichtung (202);
Steuern, an dem Personal-Computer (204), der Anzeige der Vorschaubilddaten als Reaktion auf die Steuersignale, die von der Druckvorrichtung (202) empfangen wurden; und
Drucken, an der Druckvorrichtung (202), des angezeigten Bilds als Reaktion auf eine Benutzer-Druckanforderung an der Druckvorrichtung (202) **durch** Lesen der vollen Bilddaten des angezeigten Bilds von der Speicherkarte (200).

10. Verfahren nach Anspruch 9, weiter umfassend:
Bestimmen, ob eine Speicherkarte (200), die Bilddaten trägt, in die Druckvorrichtung (202) eingesetzt wurde und ob die Druckvorrichtung (202) mit dem Personal-Computer (204) verbunden wurde,
wobei nach Bestimmung des Einsetzens der Speicherkarte (200) in die Druckvorrichtung (202) und Verbindens der Druckvorrichtung (202) mit dem Personal-Computer (204) auf die Vorschaubilddaten geprüft wird oder diese erzeugt werden.

11. Verfahren nach Anspruch 9, wobei, wenn der Benutzer nicht Drucken des angezeigten Bilds anfordert, die Anzeige der Vorschaubilddaten an dem Personal-Computer (204) fortdauert.

12. Verfahren nach Anspruch 10, wobei das Bestimmen umfasst:
Bestimmen, ob in der Speicherkarte gespeicherte Daten Bilddaten sind, wenn bestimmt wurde, dass die Speicherkarte (200) in die Druckvorrichtung (202) eingesetzt wurde; und
Bestimmen, ob die Druckvorrichtung (202) mit dem Personal-Computer (204) verbunden wurde, wenn bestimmt wurde, dass die in der Speicherkarte (200) gespeicherten Daten Bilddaten sind.

13. Verfahren nach Anspruch 9, wobei das Prüfen auf oder das Erzeugen der Vorschaubilddaten umfasst:
Bestimmen, ob die von der Speicherkarte (200) gelesenen Bilddaten Vorschaubilddaten enthalten; und
Komprimieren der Bilddaten, wenn bestimmt wurde, dass die von der Speicherkarte (200) gelesenen Bilddaten keine Vorschaubilddaten enthalten.

14. Verfahren nach Anspruch 9, wobei das Anzeigen der Bilddaten umfasst:
Lesen, durch den Personal-Computer (204), der Vorschaubilddaten, die mit einem Benutzer-ausgewählten Bildindexwert korrespondieren, der an der Druckvorrichtung (202) ausgewählt und von der Druckvorrichtung (202) an den Personal-Computer (204) übermittelt wurde; und
Anzeigen der gelesenen Vorschaubilddaten.

15. Verfahren nach Anspruch 14, wobei das Lesen der Vorschaubilddaten umfasst:
Ignorieren des Bildindexwerts, der von der Druckvorrichtung (202) als ein letzter Bildindexwert bereitgestellt wurde, wenn ein vorheriges Vorschaubild angezeigt wird; und
Lesen der Vorschaubilddaten, die mit dem letzten Bildindexwert korrespondieren, nachdem das vorherige Vorschaubild vollständig angezeigt wurde.

16. Verfahren nach Anspruch 14, wobei das Anzeigen der Vorschaubilddaten weiter umfasst:
Übermitteln des Benutzer-ausgewählten Bildindexwerts an den Personal-Computer (204), wenn der Personal-Computer (204) bereit ist, einen neuen Bildindexwert zu empfangen; und
Lesen, durch den Personal-Computer (204), der Vorschaubilddaten, die mit dem Benutzer-ausgewählten Bildindexwert korrespondieren, der von der Druckvorrichtung (202) bereitgestellt wurde.

17. Verfahren nach Anspruch 9, wobei der Personal-Computer (204) einen Monitor (206) enthält und die Vorschaubilddaten mit einer vorbestimmten Größe an einer vorbestimmten Position auf dem Monitor (206) angezeigt werden.

18. Verfahren nach Anspruch 9, wobei die Vorschaubilddaten gemäß einer variablen Größe an einer variablen Position angezeigt werden.

19. Verfahren nach Anspruch 17, wobei die vorbestimmte Größe ein Teil des Bildschirms des Monitors (206) einnimmt.

20. Verfahren nach Anspruch 9, wobei das Drucken der Bilddaten umfasst:
Lesen, an der Druckvorrichtung (202), der nicht komprimierten Bilddaten, die mit dem angezeigten Vorschaubild korrespondieren, von der Speicherkarte (200) als Reaktion auf die Benutzer-Druckanforderung;
Bildverarbeitung der gelesenen Bilddaten; und
Drucken der bildverarbeiteten Bilddaten.

21. Bildanzeigefreie Druckvorrichtung, enthalten in einem System, nach einem der Ansprüche 1 - 8, umfassend:
Benutzereingabemittel (224);
eine Schnittstelle für eine Speicherkarte (200);
Datenverarbeitungsmittel (222) zum Lesen von Bilddaten von einer Speicherkarte (200) über die Schnittstelle; und
Kommunikationsmittel (276), um sie kommunikativ an einen Personal-Computer (204) zu koppeln,
wobei die Vorrichtung (202) konfiguriert ist, um Vorschaubilder zu übermitteln, die zu Bilddaten, die von einer Speicherkarte (200) über die Schnittstelle lesbar sind, in Beziehung stehen, zusammen mit assoziierten Indexwerten an den Personal-Computer (204) zu übermitteln.

22. Druckvorrichtung nach Anspruch 21, wobei das Datenverarbeitungsmittel (222) konfiguriert ist zum:
Detektieren des Einsetzens einer Speicherkarte (200), die Bilddaten trägt, in die Vorrichtung (202), um Verbindung zu der Schnittstelle herzustellen, und Detektieren von Verbindung der Vorrichtung (202) mit einem Personal-Computer (204) durch das Kommunikationsmittel (276) und
Übermitteln von Bilddaten von einer Speicherkarte (200) und eines erzeugten Bildindexwerts an den Personal-Computer (204).

## Revendications

1. Système d'impression d'image comprenant :
un appareil d'impression sans affichage d'image (202), ayant un moyen d'entrée d'utilisateur (224), une interface pour carte de mémoire (200) et un moyen de traitement de données (222) pour lire des données d'image depuis une carte de mémoire (200) par l'intermédiaire de ladite interface, et
un ordinateur (204) couplé de façon à communiquer avec l'appareil d'impression (202) et recevoir de celui-ci des données d'image et configuré pour afficher sur une unité de visualisation (206) des image définies par les données d'image reçues depuis l'appareil d'impression,
**caractérisé en ce que**
l'appareil d'impression (202) est configuré pour transmettre à l'ordinateur (204) des images de prévisualisation, se rapportant aux données d'image lisibles depuis une carte de mémoire (200) par l'intermédiaire de ladite interface, avec des valeurs d'indice associées, et
l'ordinateur (204) est configuré pour stocker des images de prévisualisation et valeurs d'indice associées, reçues depuis le moyen d'impression sans affichage d'image (202), et afficher lesdites images de prévisualisation, et
l'appareil d'impression (202) est configuré pour envoyer des signaux de commande à l'ordinateur (204) en réponse au fonctionnement du moyen d'entrée d'utilisateur (224) et l'ordinateur (204) est sensible auxdits signaux de commande afin de commander l'affichage des images de prévisualisation reçues depuis l'appareil d'impression (202), l'appareil d'impression (202) imprimant les données d'image affichées en réponse à une requête d'impression d'utilisateur au niveau de l'appareil d'impression sans affichage d'image en lisant les données d'image complètes de l'image en cours d'affichage sur l'unité de visualisation (206) depuis la carte de mémoire.

2. Système d'impression d'image selon la revendication 1, dans lequel l'appareil d'impression (202) est configuré pour déterminer si une image stockée dans une carte de mémoire (200), sollicitable par l'intermédiaire de ladite interface, est accompagnée ou non d'une image de prévisualisation, et, dans la négative, créer une image de prévisualisation destinée à être transmise à l'ordinateur (204) en vue de son affichage.

3. Système d'impression d'image selon la revendication 1, dans lequel :
l'ordinateur (204) est un ordinateur individuel ;
l'appareil d'impression (202) comprend :
une section de préparation d'impression (220) pour déterminer si une carte de mémoire (200), portant des données d'image, a été insérée ou non dans l'appareil d'impression (202) de façon à être connectée à ladite interface et si l'appareil d'impression (202) a été connecté à l'ordinateur individuel (204), et produire en sortie un résultat de détermination comme signal de commande (C) ;
un processeur de données (222) pour traiter des données d'image, lues depuis une carte de mémoire (200) par l'intermédiaire de ladite interface, rechercher ou générer des données d'image de prévisualisation en réponse au signal de commande (C) et transmettre les données d'image de prévisualisation à l'ordinateur individuel (204) avec les valeurs d'indice d'image associées ;
une section de manipulation de touches actionnable par l'utilisateur (224) pour sélectionner une valeur d'indice d'image et produire en sortie un signal de requête d'impression, demandant l'impression des données d'image correspondant à une valeur d'indice d'image sélectionnée par l'utilisateur ; et
une section d'impression (226) pour imprimer les données d'image traitées en image, reçues depuis le processeur de données (222) en réponse à un signal de requête d'impression depuis la section de manipulation de touches actionnable par l'utilisateur (224), et
l'ordinateur individuel (204) comprenant :
une mémoire (232) pour stocker des données d'image de prévisualisation et valeurs d'indice associées transmises depuis le processeur de données (222) ; et
une unité de commande d'affichage (234) pour lire les données d'image de prévisualisation, correspondant à une valeur d'indice d'image sélectionnée par l'utilisateur depuis l'unité d'impression d'image, depuis la mémoire (232) et afficher les données d'image lues sur l'unité de visualisation (206).

4. Système d'impression d'image selon la revendication 3, dans lequel la section de préparation d'impression comprend :
un capteur (250) pour détecter si une carte de mémoire (200) a été insérée ou non et produire en sortie un résultat de détection ;
un premier détecteur de données (252) pour détecter si le type de données lues depuis la carte de mémoire (200) en réponse au résultat de détection ; et
un vérificateur de connexion (254) pour vérifier si l'ordinateur individuel (204) a été connecté ou non à l'appareil d'impression (220) en réponse à un résultat de détection reçu depuis le premier détecteur de données (252) et produire en sortie un signal de commande de vérification de connexion.

5. Système d'impression d'image selon la revendication 3, dans lequel le processeur de données (222) comprend :
un deuxième détecteur de données (270) pour détecter si les données d'image lues depuis une carte de mémoire (200), par l'intermédiaire de ladite interface, comportent ou non des données d'image de prévisualisation en réponse au signal de commande ;
un compresseur de données (272) pour compresser les données d'image, lues depuis une carte de mémoire (200) par l'intermédiaire de ladite interface, afin de produire une image de prévisualisation en réponse à un résultat de détection reçu depuis le deuxième détecteur de données (270) ;
un générateur de valeurs d'indice d'image (274) pour générer les valeurs d'indice d'image qui sont uniques dans les images lues depuis la même carte de mémoire (200) ;
un émetteur de données (276) pour transmettre à l'ordinateur individuel (204) les données d'image de prévisualisation, reçues depuis une carte de mémoire (200) ou depuis le compresseur de données (272), avec les valeurs d'indice d'image générées, reçues depuis le générateur de numéro d'image (274) en réponse au résultat de détection reçu depuis le deuxième détecteur de données (270), et transmettre à l'ordinateur individuel (204) une valeur d'indice d'image sélectionnée par l'utilisateur reçue depuis la section de manipulation de touches (224) ; et
un convertisseur de format (278) pour convertir des données d'image de format RVB lues depuis une carte de mémoire (200), en données d'image de format CMJN et produire en sortie les données d'image de format CMJN vers la section d'impression (226).

6. Système d'impression d'image selon la revendication 3, dans lequel l'unité de commande d'affichage (234) comprend un lecteur de données (290) pour lire, depuis la mémoire (232), des données d'image correspondant à une valeur d'indice d'image sélectionnée par l'utilisateur, lesquelles sont générées dans la section de manipulation de touches (224) et transmises depuis l'appareil d'impression (202), et produire en sortie les données d'image lues vers l'unité de visualisation (206) en vue de leur affichage.

7. Système d'impression d'image selon la revendication 3, dans lequel l'unité de commande d'affichage (234) comprend un déterminateur de position/taille (292) pour déterminer une position à laquelle les données d'image lues doivent être affichées sur l'unité de visualisation (206) et la taille des données d'image de prévisualisation lues à afficher et l'unité de visualisation (206) affiche les données d'image lues en fonction de la taille déterminée à la position déterminée.

8. Système selon la revendication 7, dans lequel le déterminateur de position/taille (292) fait varier la position d'affichage et la taille des données d'image de prévisualisation et produit en sortie les résultats variés vers l'unité de visualisation (206).

9. Procédé d'impression d'une image au moyen d'un appareil d'impression (220), lequel imprime une image correspondant aux données d'image lues depuis une carte de mémoire externe (200), et un ordinateur individuel (204), lequel est connectable à l'appareil d'impression (220), le procédé étant **caractérisé par** :
la recherche ou la génération de données d'image de prévisualisation dans l'appareil d'impression (202) ;
la transmission des données d'image de prévisualisation à l'ordinateur individuel (204) avec une valeur d'indice d'image associée ;
le stockage des données d'image de prévisualisation et de la valeur d'indice d'image, transmises depuis l'appareil d'impression (202), dans l'ordinateur individuel (204) ;
l'affichage, par l'ordinateur individuel (204), des données d'image de prévisualisation transmises par l'appareil d'impression (202) ;
l'envoi de signaux de commande depuis l'appareil d'impression (202) vers l'ordinateur (204) en réponse au fonctionnement du moyen d'entrée d'utilisateur (224) de l'appareil d'impression (202) ;
la commande, au niveau de l'ordinateur (204), de l'affichage des données d'image de prévisualisation en réponse aux signaux de commande reçus depuis l'appareil d'impression (202) ; et
l'impression, au niveau de l'appareil d'impression (202), de l'image affichée en réponse à une requête d'impression d'utilisateur au niveau de l'appareil d'impression (202), en lisant les données d'image complètes de l'image affichée depuis la carte mémoire (200).

10. Procédé selon la revendication 9, comprenant en outre :
la détermination si une carte de mémoire (200), portant des données d'image, a été insérée ou non dans l'appareil d'impression (202) et si l'appareil d'impression (202) a été connecté ou non à l'ordinateur individuel (204) ;
dans lequel les données d'image de prévisualisation sont recherchées ou générées lorsqu'il a été déterminé que la carte de mémoire (200) a été insérée dans l'appareil d'impression (202) et que l'appareil d'impression (202) a été connecté à l'ordinateur individuel (204).

11. Procédé selon la revendication 9, dans lequel, si l'utilisateur ne demande pas l'impression de l'image affichée, l'affichage des données d'image de prévisualisation au niveau de l'ordinateur individuel (204) continue.

12. Procédé selon la revendication 10, dans lequel la détermination comprend :
la détermination si les données stockées dans la carte de mémoire sont ou non des données d'image, s'il a été déterminé que la carte de mémoire (200) a été insérée dans l'appareil d'impression (202) ; et
la détermination si l'appareil d'impression (202) a été connecté à l'ordinateur individuel (204), s'il a été déterminé que les données stockées dans la carte de mémoire (200) sont des données d'image.

13. Procédé selon la revendication 9, dans lequel la recherche ou génération des données d'image de prévisualisation comprend :
la détermination si les données d'image, lues depuis la carte de mémoire (200), comportent ou non des données d'image de prévisualisation ; et
la compression des données d'image, s'il a été déterminé que les données d'image, lues depuis la carte de mémoire (200), ne comportent pas de données d'image de prévisualisation.

14. Procédé selon la revendication 9, dans lequel l'affichage des données d'image comprend :
la lecture, par l'ordinateur individuel (204) des données d'image de prévisualisation correspondant à une valeur d'indice d'image sélectionnée par l'utilisateur, sélectionnées au niveau de l'appareil d'impression (202) et transmises depuis l'appareil d'impression (202) à l'ordinateur individuel (204) ; et
l'affichage des données d'image de prévisualisation lues.

15. Procédé selon la revendication 14, dans lequel la lecture des données d'image de prévisualisation comprend :
la non-considération de la valeur d'indice d'image fournie par l'appareil d'impression (202) comme dernière valeur d'indice d'image, si une image de prévisualisation antérieure a été affichée ; et
la lecture des données d'image de prévisualisation, correspondant à la dernière valeur d'indice d'image, après l'affichage complet de l'image de prévisualisation antérieure.

16. Procédé selon la revendication 14, dans lequel l'affichage des données d'image de prévisualisation comprend en outre :
la transmission de la valeur d'indice d'image sélectionnée par l'utilisateur à l'ordinateur individuel (204), si l'ordinateur individuel (204) est prêt à recevoir une nouvelle valeur d'indice d'image ; et
la lecture, par l'ordinateur individuel (204) des données d'image de prévisualisation correspondant à la valeur d'indice d'image sélectionnée par l'utilisateur fournie par l'appareil d'impression (202).

17. Procédé selon la revendication 9, dans lequel l'ordinateur individuel (204) comporte une unité de visualisation (206), et les données d'image de prévisualisation sont affichées avec une taille prédéterminée à une position prédéterminée sur l'unité de visualisation (206).

18. Procédé selon la revendication 9, dans lequel les données d'image de prévisualisation sont affichées en fonction d'une taille variable à une position variable.

19. Procédé selon la revendication 17, dans lequel la taille prédéterminée occupe une partie de l'écran de l'unité de visualisation (206).

20. Procédé selon la revendication 9, dans lequel l'impression des données d'image comprend :
la lecture, au niveau de l'appareil d'impression (202), des données d'image non compressées, correspondant à l'image de prévisualisation affichée, depuis la carte de mémoire (200) en réponse à la requête d'impression de l'utilisateur ;
le traitement d'image des données d'image lues ; et
l'impression des données d'image traitées en image.

21. Appareil d'impression sans affichage d'image compris dans un système, selon l'une quelconque des revendications 1 à 8 comprenant :
un moyen d'entrée d'utilisateur (224),
une interface pour carte de mémoire (200) ;
un moyen de traitement de données (222) pour lire des données d'image depuis une carte de mémoire (200) par l'intermédiaire de ladite interface, et
un moyen de communication (276) destiné à être couplé pour communiquer avec un ordinateur individuel (204),
dans lequel l'appareil (202) est configuré pour transmettre à l'ordinateur individuel (204) des images de prévisualisation, concernant des données d'image lisibles depuis une carte de mémoire (200) par l'intermédiaire de ladite interface, avec des valeurs d'indice associées.

22. Appareil d'impression selon la revendication 21, dans lequel le moyen de traitement de données (222) est configuré pour :
détecter l'insertion d'une carte de mémoire (200), portant des données d'image, dans l'appareil (202) de façon à ce qu'elle se connecte à ladite interface et détecter la connexion de l'appareil (202) à un ordinateur individuel (204) par ledit moyen de communication (276), et
transmettre à l'ordinateur individuel (204) des données d'image lues depuis une carte de mémoire (200) et une valeur d'indice d'image générée.
